# EUROPEAN PATENT APPLICATION

(11) **EP 4 808 139 A1**
(43) Date of publication of application: **16.09.2026**
(21) Application number: 25163897.9
(22) Date of filing: 14.03.2025
(51) Int. Cl.: H04N 23/70, H04N 23/71, H04N 23/72, H04N 23/73, H04N 23/74, H04N 23/75, H04N 23/76, H04N 7/18, H04N 23/56, G03B 15/03

(54) **METHOD FOR CONTROLLING EXPOSURE TARGET AND ILLUMINATION INTENSITY OF A SCENE MONITORED BY A CAMERA, MONITORING DEVICE, COMPUTER PROGRAM, AND COMPUTER-READABLE STORAGE MEDIUM**

(71) Applicant: Keenfinity GmbH, 81737 München (DE)
(72) Inventor: Silvestre, Fernando, 13065-900 Campinas (BR); Haino, Masami, 5617 Eindhoven (NL); Xiao, Sa, 5617 Eindhoven (NL)
(74) Representative: Winter, Brandl - Partnerschaft mbB

(57) **Abstract**

There is provided a method for controlling an exposure target of a camera monitoring a scene, and an illuminator, which illuminates the scene monitored by the camera. There is also provided a monitoring device, a computer program, and computer-readable storage medium.

## Description

The present disclosure relates to a method for controlling an exposure target of a camera monitoring a scene, and an illuminator, which illuminates the scene monitored by the camera. The present disclosure further relates to a monitoring device, a computer program, and a computer-readable storage medium.

When using a camera to monitor a scene, light is sometimes added to the scene to improve image quality. The illuminator that adds light to the scene can be integrated with the camera or placed outside the camera. The light that is added to the scene is light with wavelengths in the range to which the camera is sensitive. Typical light that the camera is sensitive is visible light and infrared light, both of which are referred to as light in the following discussion.

Camera exposure control adjusts shutter speed, gain, and iris to obtain sufficient image quality in different lighting environments. It is a common exposure control method to adjust shutter speed, gain, and iris to bring the signal intensity averaged over the entire captured image closer to a target intensity.

In low-light environments such as darkness, light is added to an entire shooting scene for improving the image quality. However, if a distance between the illuminator and a subject in the scene is too far and the illuminator's light cannot illuminate the shooting scene, the exposure control such as the above will increase the gain of the image sensor, increase the shutter speed, and open the iris. As a result, the captured image has a low dynamic range. Then, if an object will be close to the camera, it will reflect the illuminator's light too much and the object will be oversaturated on the captured image. Because in case of the exposure control that keeps the average signal intensity of the entire image at a constant level, the size of a person is small for the entire image area and thus the signal intensity of the person has a low contribution to the image average value. In addition, the scene has a wide dynamic range because the scene includes the bright area irradiated by the illuminator and a dark area in which there is no light from the illuminator. The dynamic range of the captured image is then low when using the exposure control described above.

US 9 615 032 B2 proposes an exposure control method in which the exposure target is increased or decreased according to the image saturation score in order to prevent saturation of some areas of the image by the illuminator. Specifically, after saving multiple images and identifying the location of saturated pixels, a histogram is calculated from the images excluding the areas corresponding to the saturated pixels. The saturation score is obtained by summing the weighted histogram bins.

Further, WO 2024 / 153 331 A1 discloses a method for controlling an illuminator.

It is an object of the present disclosure to provide an improved technique for providing an image of a monitored scene with an enhanced quality. In particular, the technique should enable to control an exposure target and an illuminator.

This object is solved by the subject matters according to the independent claims. Preferred embodiments are derivable from the dependent claims, the description and/or the drawings.

The present disclosure provides a (computer-implemented) method for controlling an exposure target of a camera and an illuminator which illuminates a scene monitored by the camera. In particular, the method comprises determining a peak brightness of an image of the scene captured with the camera, which is a brightness that corresponds to a predetermined percentage (x %) of a cumulative relative frequency, determining an average brightness of the image, which is the average of the image signal intensities, and determining whether a peak brightness saturation exists in the image to control the exposure target. The peak brightness saturation exists, when the peak brightness is exceeding a target peak brightness. In addition, the method comprises determining whether the peak brightness is within a tolerance range of a target peak brightness and determining a bright area detection of the image and an average brightness of the bright areas to control the illuminators intensity.

At first, the method determines the tendency of a dynamic range based one the relation between the average brightness and the peak brightness, and if an exposure tendency of the whole image is overexposed or underexposed based on the average brightness value. After determining the exposure tendency, the exposure setting is updated for the later video frame.

If the average brightness is less than a maximum target brightness threshold and no peak brightness saturation exists in the image, the exposure target is increased.

However, if the average brightness of the image is greater than a minimum target brightness threshold and a peak brightness saturation does exist in the image, the exposure target is decreased.

However, if the average brightness is equal to or greater than the maximum target brightness threshold and no peak brightness saturation exists in the image, or if the average brightness is equal to or less than a minimum target brightness threshold and a peak brightness saturation exists in the image, the exposure target is kept.

So, without the presence of peak brightness saturation the exposure target is either increased or kept, depending on the average brightness of the image. However, with presence of peak brightness saturation the exposure target is either decreased or kept, depending on the average brightness of the image. When determining the peak brightness saturation, i.e. determining whether the peak brightness is greater than the target peak brightness, a tolerance range can be considered. In this way, the exposure control does not respond to small differences of the peak brightness value.

In addtion to the exposure target control, the intensity of the illuminator is determined depeding on the peak brightness and target peak brightness. To avoid that the illuminator intensity is changed due to small changes of the peak brightness value causing oscillation or flicker of the brightness of the video image due to exposure setting change at the same time, the illuminator does not respond to small differences of the peak brightness value as long as the changes are within a tolerance range.

However, the illuminators intensity is kept and the method ends, if the peak brightness is within the tolerance range of the target peak brightness.

However, if the peak brightness is not within the tolerance range of the target peak brightness a bright area detection is performed. To detect bright areas, a mask is created, which is used to extract areas of the image above a certain threshold between a mode brightness and the peak brightness.

However, if the peak brightness is not within the tolerance range of the target peak brightness and if the bright area size is less than a bright area size threshold or no bright area(s) exists in the image, the illuminators intensity is increased.

However, if the peak brightness is not within the tolerance range of the target peak brightness and if the bright area size is equal to or greater than the bright area size threshold and at least one bright area exists in the image, the average brightness of the bright area is determined. If the determined average brightness of the bright area is greater than a bright area average brightness threshold, the illuminator intensity is decreased.

However, if the peak brightness is not within the tolerance range of the target peak brightness, the bright area size is equal to or greater than the bright area size threshold and at least one bright area exists in the image. If the determined average brightness of the bright area is equal to or less than the bright area average brightness threshold, the illuminator intensity is kept.

As the human eye perception for brightness is non linear, a tone mapping process can be used to convert the linear image signals into a non linear space to preserve more details on the bright and the dark. The tone mapping process can be a signal level dependent digital gain curve per pixel. Therefore, the method can further comprise determining statistics inside an image processing unit, determining whether a peak brightness at non linear space of the image is within a tolerance range at different processing stages and determining whether to keep, increase or reduce the processing on a bright target. In this way, the quality of the image can be further enhanced.

According to an embodiment, the different image processing stages include a non linear tone mapping process calculation.

According to an embodiment, the statistics inside the image processing unit include a histogram calculation and a cumulative histogram calculation, where the peak brightness at non linear space of the image is determined.

According to an embodiment, in case an monocolor filter sensor is used, the average brightness is determined as the average of a monocolor channel.

According to an embodiment, in case a multicolor filter sensor is used, such as RGB-color filter sensor, the average brightness is determined as the average of the whole image of one color channel or a combination of at least two or more channels.

According to an embodiment, the method further comprises determining a peak brightness as a brightness that corresponds to a predetermined percentage (x %) of a cumulative frequency. The cumulative frequency is determined by a cumulative histogram based on a brightness histogram of the image, wherein the bins of the brightness histogram should match the number of ranges of the brightness of the image, preferably 1/2-1/3 of the number of ranges of the signal intensity of the image, or 1/3-1/10 of the number of ranges.

According to an embodiment, the tolerance range is between 3-20 %, preferably 3-8 %, 5-15 % or 15-20 %. By this, oscillation or flicker of the brightness of the video image can be avoided.

A monitoring device according to one aspcet of the disclosure comprises a camera including an image sensor and an iris, a processor, a memory, an interface with an illuminator containing one or more light sources, each of which emits light of a wavelength in the sensitivity range of the image sensor, often infra-red and visible light, and means adapted to execute the steps of any disclosed method. The amount of light emitted by the illuminator can be adjusted individually by increasing or decreasing the power supplied to each light source. The camera obtains the captured images from the image sensor, stores them in the cameras internal memory, processes the images in the processor and outputs the images (e.g. compressed video such as MP4 or AVI, compressed still images such as JPEG, uncompressed still images such as RAW, uncompressed video images).

A monitoring device according to another aspect of the disclosure comprises a camera including an image sensor and an iris, a processor, a memory, an interface with an illuminator containing one or more light sources, each of which emits light of a wavelength in the sensitivity range of the image sensor, often infra-red and visible light, in which the camera and illuminator can be separated, and means adapted to execute the steps of any disclosed method. The camera obtains the captured images from the image sensor, stores them in the cameras internal memory, processes the images in the processor and outputs the images (e.g. compressed video such as MP4 or AVI, compressed still images such as JPEG, uncompressed still images such as RAW, uncompressed video images).

According to one embodiment, the monitoring device comprises an image processing unit. In this way, a tone mapping process can be used to convert the linear image signals into a non linear space to preserve more details on the bright and the dark.

A computer program according to the disclosure comprises instructions to cause one of the above monitoring devices to execute the steps of the method according to the disclosure. The computer program can be implemented in form of software, firmware or application, which can be executed by a control circuit, such as a processor.

A computer-readable storage meduim according to the disclosure has stored theron the above computer program.

In the following, preferred embodiments of the present disclosure will be described with reference to the drawings. In the drawings:
Fig. 1 schematically shows a flow chart of one embodiment for controlling an exposure target and an illuminator;
Fig. 2 schematically shows a block diagram of a monitoring device according to one embodiment;
Fig. 3 schematically shows a block diagram of a monitoring device according to another embodiment;
Fig. 4 schematically shows the determination of an exposure target control;
Fig. 5 schematically shows the determination of an ilumminator intensity control;
Fig. 6 schematically shows a first exemplary image;
Fig. 7 shows the brightness histogram of the first exemplary image;
Fig. 8 shows the cumulative brightness histogram of the first exemplary image;
Fig. 9a shows a brightness histogram of a second exemplary image, wherein a peak brightness is less than a target peak brightness;
Fig. 9b shows the cumulative brightness histogram of the second exemplary image;
Fig. 10a shows a brightness histogram of a third exemplary image, wherein a peak brightness is equal to a target peak brightness;
Fig. 10b shows the cumulative brightness histogram of the third exemplary image;
Fig. 11a shows a brightness histogram of a fourth exemplary image, wherein a peak brightness is greater than a target peak brightness;
Fig. 11b shows the cumulative brightness histogram of the fourth exemplary image;
Fig. 12a shows a brightness histogram of a fifth exemplary image, wherein a peak brightness is greater than a target peak brightness;
Fig. 12b shows the cumulative brightness histogram of the fifth exemplary image;
Fig. 13 schematically shows a flow chart of another embodiment for controlling an exposure target, an illuminator and a bright target in a tone mapping process with non linear transformation;
Fig. 14 schematically shows a flow chart for controlling a bright target in a tone mapping with non linear transformation;
Fig. 15 schematically shows a flow chart for controlling a bright target in a tone mapping with non linear transformation, wherein the bright target is as the same value as the target for exposure control;
Fig. 16 schematically shows a flow chart for controlling a bright target in a tone mapping without non linear transformation;
Fig. 17a shows a brightness histogram of a sixth exemplary image after a non linear transformation in an initial status of a tone mapping process based on Fig.14, wherein a peak brightness #2 is greater than a target peak brightness #3;
Fig. 17b shows the tone mapping process based on Fig.14 in the initial status of Fig. 17a;
Fig. 18a shows a brightness histogram of the sixth exemplary image after a non linear transformation in a final status of the tone mapping process based on Fig.14, wherein the peak brightness #2 is equal to the target peak brightness #3;
Fig. 18b shows the tone mapping process based on Fig.14 in the final status of Fig. 18a.

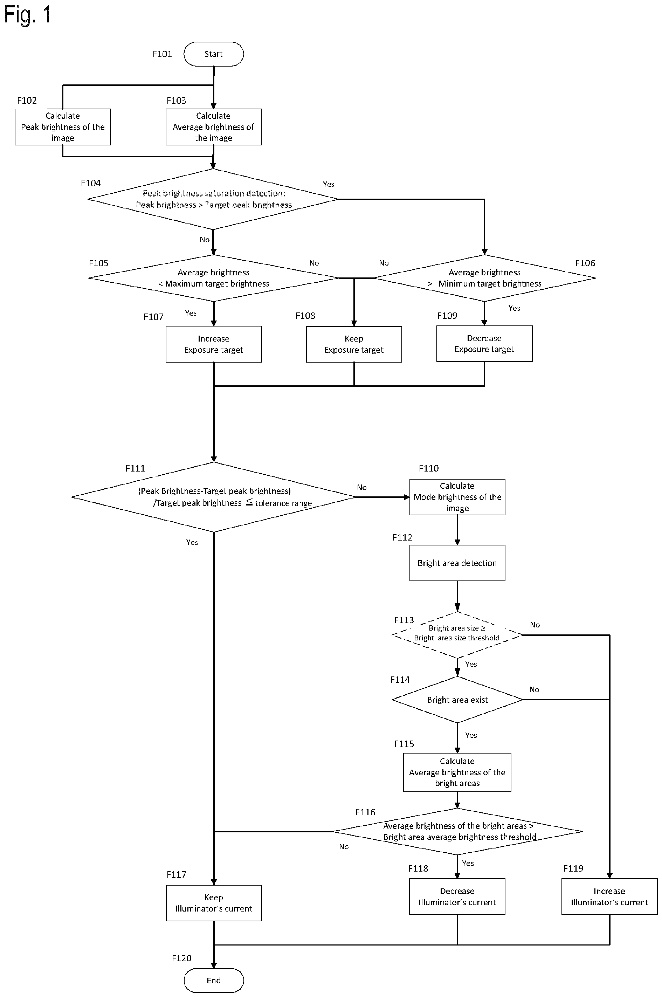

In the following, exemplary embodiments of the disclosure are described with reference to Figs. 1 to 18b.

Referring to Fig. 1, a flow chart of an embodiment of a method according to the disclosure is shown and will be described in the following.

The method is started in step F101.

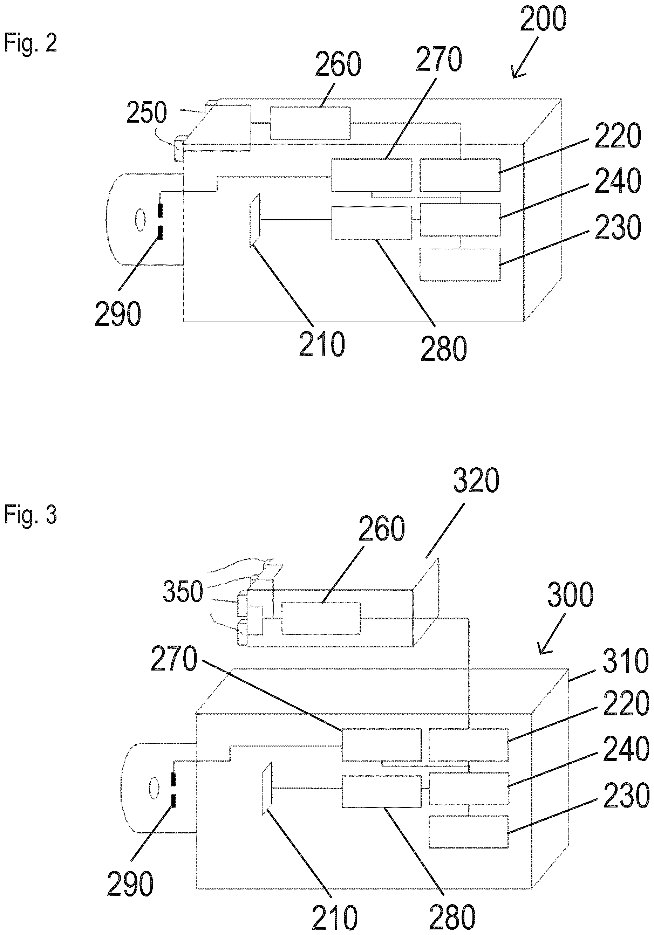

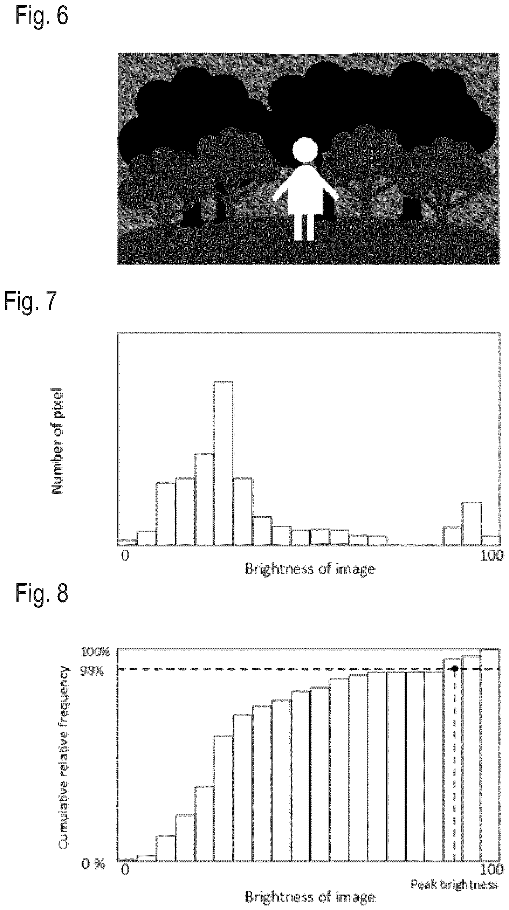

In steps F102 and F103, the brightness of the image (cf. Fig. 6-8) of the scene captured with a camera (cf. Fig. 2, 3) is determined by calculating a brightness histogram (cf. Fig. 7). A peak brightness calcluated in F102 is a brightness that corresponds to a predetermined percentage (x %) of a cumulative relative frequency. For example, if the predetermined percentage corresponds to 98 %, the peak brightness can be determined such as in Fig. 8. An average brightness, which is the average of the image signal intensities, is calculated from the image in F103

The peak brightness and the average brightness, which are in the unit system of image signal intensity, are used to determine the relation between the dynamic range and the saturation.

A peak brightness saturation exists, when the peak brightness is exceeding a target peak brightness. For example:

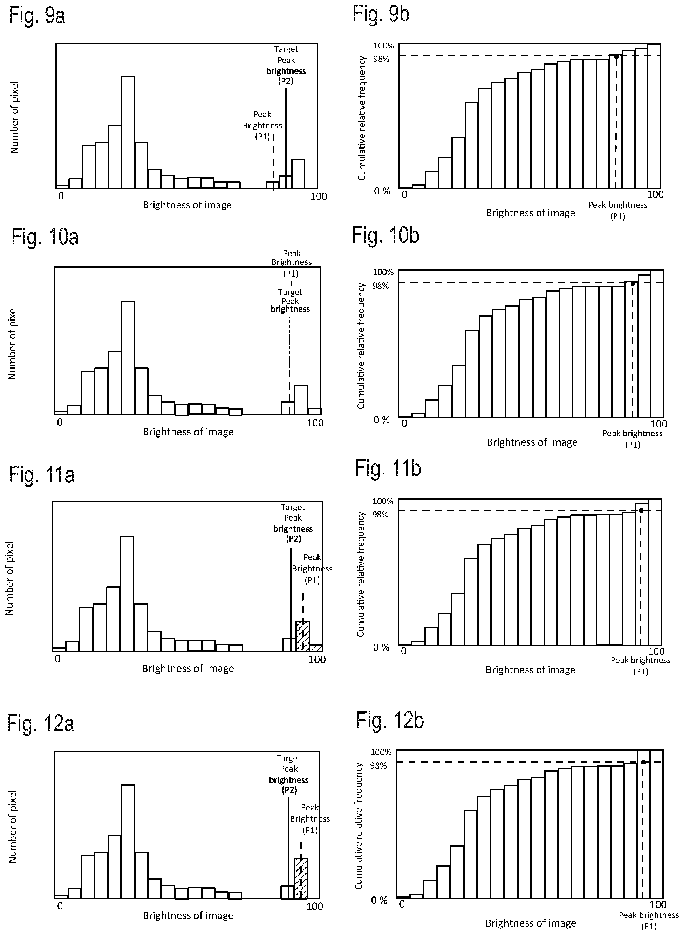

If the peak brightness (P1) is less than the target peak brightness (P2) in an image that does not include the pixel which corresponds to a maximum brightness of the image (100), no peak brightness saturation is detected (cf. Fig. 9a, 9b).

If the peak brightness (P1) is equal to the target peak brightness (P2) in an image that includes the pixel which corresponds to a maximum brightness of the image (100), no peak brightness saturation is detected (cf. Fig. 10a, 10b).

If the peak brightness (P1) is greater than the target peak brightness (P2) in an image that includes the pixel which corresponds to a maximum brightness of the image (100), a peak brightness saturation is detected (cf. Fig. 11a, 11b).

If the peak brightness (P1) is greater than the target peak brightness (P2) in an image that does not include the pixel which corresponds to a maximum brightness of the image (100), a peak brightness saturation is detected (cf. Fig. 12a, 12b).

In steps F104, F105 and F106, the tendency of the dynamic range is determined based on the relation between the peak brightness and the average brightness in order to determine if the exposure tendency of the entire image is overexposed or underexposed.

After determining the exposure tendency in steps F104, F105 and F106, the exposure setting is updated/kept for the later video frame in one of the steps F107, 108 or F109.

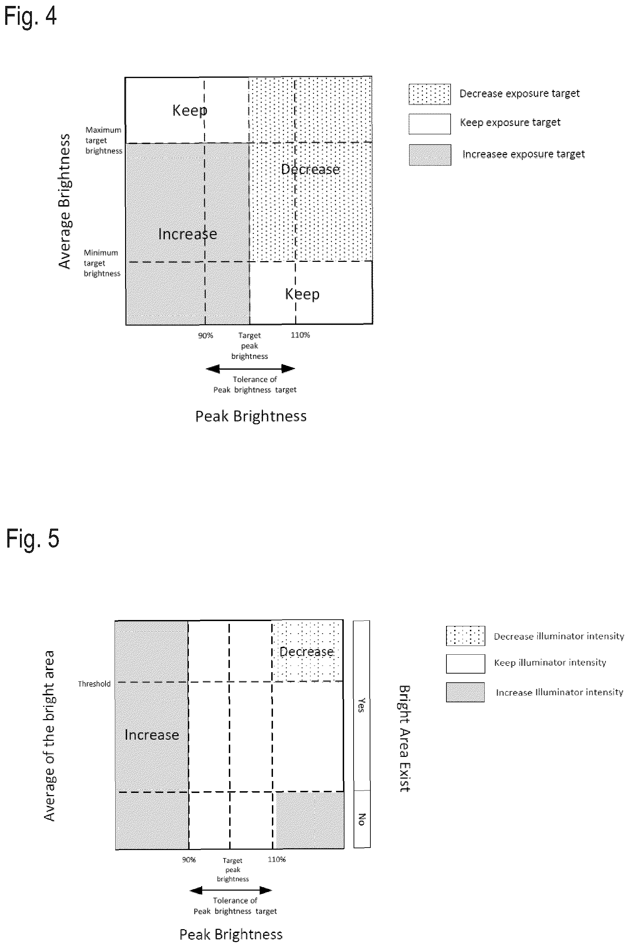

The determination of the exposure tendency and the target exposure are illustrated in Fig. 4

Back to Fig. 1, the illuminator intensity depends on the size of a change of the peak brightness, on the bright area detection and the average brightness value of a bright area (see steps F111 to F119). The illuminator does not response to small differences of the peak brightness value as long as the changes are within a tolerance range (see F111). In this way, changes of the illuminator intensity due to small changes of the peak brightness value, which causes oscillation or flicker of the brightness of the video image due to exposure setting change at the same time, is avoided.

The illuminator intensity is kept F117 and the method ends, if the peak brightness is within the tolerance range of the target peak brightness.

The bright area detection is performed F112 if the peak brightness is not within the tolerance range of target peak brightness. To detect bright areas, a mask is created from which areas of the image above a certain threshold are extracted. The threshold is between a mode brightness, which is calculated in F110, and the peak brightness. The illuminators intensity is increased F119 if not at least one bright area exists in the image F114 or the bright area size is beneath a bright area size threshold value F113. If a bright area exists an average brightness of the bright area is calculated. If the determined average brightness of the bright areas is greater than a bright area average brightness threshold the illuminator intensity is decreased F118. Otherwise if the determined average brightness of the bright areas is not greater than the bright area average brightness threshold the illuminator intensity is kept F117.

Afterwards, the method is ended in F120.

The determination of the illuminator intensity control can also be illustrated as shown in Fig. 5.

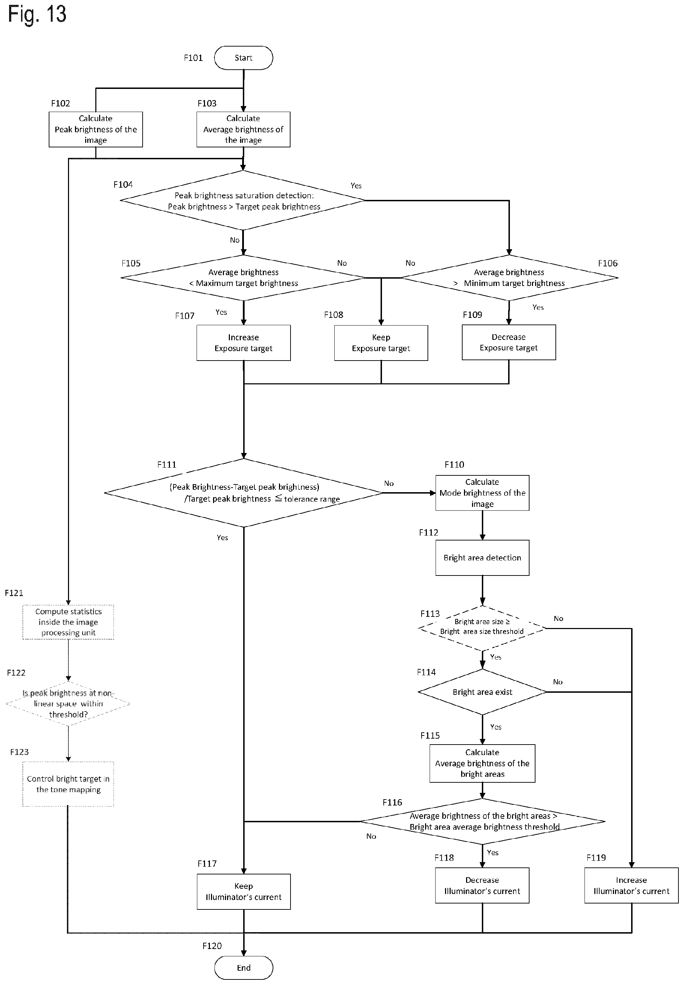

In another embodiment (c.f. flow chart Fig. 13), the method further comprises determining statistics inside an image processing unit F121, determining whether a peak brightness at non linear space of the image is within a tolerance range at different processing stages F122 and determining whether to keep, increase or reduce the processing on a bright target F123, as an example. These steps are performed after F102 and in parallel to exposure target control and iluminator control.

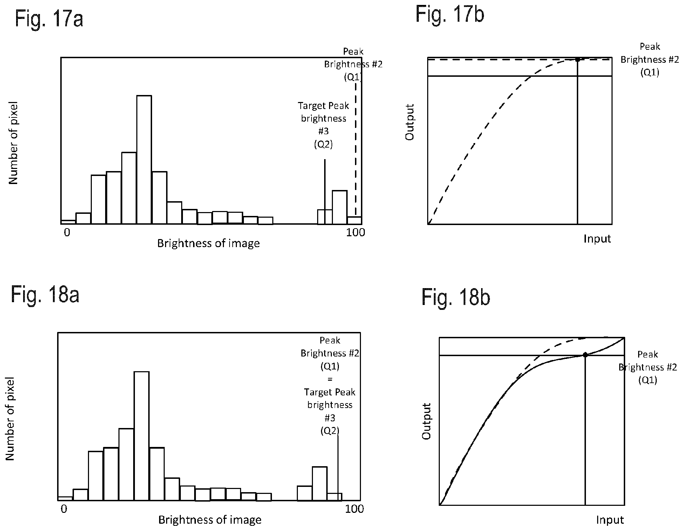

Fig. 17a shows a brightness histogram of an image, wherein a peak brightness #2 (Q1) is greater than a target peak brightness #3 (Q2) and where no adjustment on the tone mapping process is made (c.f. Fig 17b).

Fig. 18a shows a brightness histogram of the image, wherein the peak brightness #2 (Q1) is equal to the target peak brightness #3 (Q2) and where the bright part of the tone mapping process is adjusted (c.f. Fig. 18b).

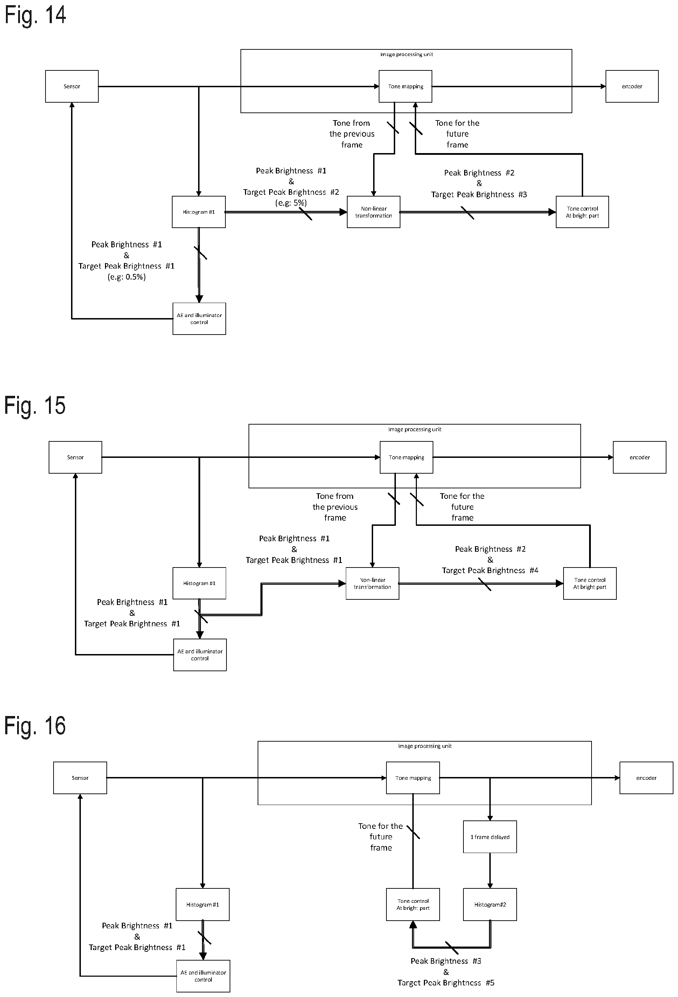

In case of another embodiment there can be two different target peak brightnesses. The target peak brightness for exposure control and illuminator control is a target signal to avoid over saturation on the image sensor in linear space. However, a target peak brightness for tone mapping is a target signal to avoid observing over saturation on human visual perception which is in non linear space. Human eyes are insensitive to small variations in a bright area, while sensors are sensitive to those small variations. Therefore, it is desirable to have two different target peak brightnesses. One for exposure and illuminator control, and another one for tone mapping control. Fig. 14 shows a diagram, in which the two target peak brightnesses are different.

As shown in Fig. 14, a target peak brightness #1 is not equal to a target peak brightness #2. The target peak brightness #1 is used in a comparision with a peak brightness #1 in order to control the exposure target and the illuminator. For a tone mapping process within the image processing unit, the peak brightness #1 and the target peak brightness #2 are converted to a peak brightness #2 at non linear space and a target peak brightness #3 at non linear space by previous frame's tone curve. The peak brightness #2 and the target peak brightness #3 are then compared to control the tone mapping process.

Fig.15 shows a diagram, in which the two target peak brightnesses are equal. There are no differences between target peak brightness #1 used for controlling the exposure target and the illuminator, and target peak brightness #1 used for the tone mapping process. Target peak brightness #4 is the non linear transformation of the target peak brightness #1 by previous frame's tone curve (c.f. Fig. 15). The peak brightness #2 and the target peak brightness #4 are then compared to control the tone mapping process.

Fig. 14 and Fig. 15 show the process to calculate two target peak brightnesses from the same histogram named histogram #1 in linear space. Fig. 16 shows a diagram to calculate two target peak brightnesses from two different histograms. The histogram #1 is generated from an image in linear space. It is used to calculate peak brightness #1 and target peak brightness #1 used for exposure and illuminator control. The histogram #2 is generated from an image in non linear space after the tone mapping process. It is used to calculate the peak brightness #3 and the target peak brightness #5 used for the tone mapping process.

The peak brightness compared in the tone mapping process could also be computed from a non linear histogram. In Fig. 16, a peak brightness #3, computed from a non linear histogram, is compared with a target peak brightness #5 to control the tone mapping process. Thereby, the target peak brightness #5 can be the same as the target peak brightness #3 or the target peak brightness #4 or any other predefined value.

Fig. 2 shows an embodiment of a monitoring device 200 comprising an image sensor 210, an image sensor driver 280, an iris 290, an iris driver 270, an illuminator driver 220, a processor 230, a memory 240 and an illuminator containing one or more light sources 250 (including one or more light sources emitting light in the sensitivity range of the image sensor, often infrared or visible light).

Fig. 3 shows another embodiment of a monitoring device 300, in which a camera 310 and an illuminator 320 are separated. The camera 310 includes the image sensor 210, the image sensor driver 280, the iris 290, the iris driver 270, the illuminator driver 220, the processor 230, the memory 240 and an interface with the illuminator 320. The illuminator 320 includes one or more light sources 350 (an illuminator that emits light in the sensitivity range of the image sensor, often infra-red, or visible light).

The illuminator contains one or more light sources 250, 350 emitting light in the sensitivity range of the image sensor 210, often infrared or visible light, and is connected to an illuminator's power supply 260. The light intensity of the illuminator's light sources varies according to the amount of power supplied by the illuminator's power supply 260. The amount of power for each light source 250, 350 can be increased or decreased individually. The illuminator's power supply 260 is connected to the illuminator driver 220, which controls the power of the camera's illuminator 260.

The illuminator contains at least one light source 250, 350 and the illuminator can illuminate the scene monitored by the camera. If the illuminator has multiple light sources 250, 350, it is also feasible that each light source 250, 350 can illuminate a different surveillance area. The disclosure can also be implemented, if each light source 250, 350 of the illuminator is of a different wavelength.

The illuminator can be installed on the camera body, as shown in Fig. 2, or separately from the camera, as shown in Fig. 3.

The camera may obtain the captured images from the image sensor, store them in the camera's internal memory, process the images in the processor and output the images (e.g. compressed video such as MP4 or AVI, compressed still images such as JPEG, uncompressed still images such as RAW, uncompressed video images).

The present disclosure can be implemented by means of a computer program comprising instructions to the monitoring devices according to the disclosure to execute the method according to the disclosure.

The computer program can be stored in a computer-readable storage medium. One example of the computer-readable storage medium is the memory 240 of the monitoring device.

### List of reference signs

- 200: device according to one embodiment
- 210: image sensor
- 220: illuminator driver
- 230: processor
- 240: memory
- 250: one or more light sources
- 260: illuminator's power supply
- 270: iris driver
- 280: image sensor driver
- 290: iris
- 300: device according to another embodiment
- 310: camera
- 320: illuminator
- 350: one or more light sources

## Claims

1. A method for controlling an exposure target of a camera monitoring a scene and an illuminator, which illuminates the scene, comprising:
determining (F102) a peak brightness of an image of the scene captured with the camera;
determining (F103) an average brightness of the image;
determining (F104) whether a peak brightness saturation exists in the image, wherein a peak brightness saturation exists when the peak brightness is greater than a target peak brightness,
- if a peak brightness saturation does not exist in the image (NO in F104) and the average brightness is less than a maximum target brightness (YES in F105), increasing (F107) the exposure target;
- if a peak brightness saturation does exist in the image (YES in F104) and the average brightness of the image is greater than a minimum target brightness (YES in F106), decreasing (F109) the exposure target;
- if a peak brightness saturation does not exist in the image (NO in F104) and the average brightness is equal to or greater than the maximum target brightness (NO in F105), or
if a peak brightness saturation does exist (YES in F104) in the image and the average brightness is equal to or less than the minimum target brightness (NO in F106), keeping (F108) the exposure target;
determining (F111) whether the peak brightness is within a tolerance range of a target peak brightness;
- if the peak brightness is within the tolerance range of a target peak brightness (YES in F111), keeping (F117) an initensity of the illuminator;
- if the peak brightness is not within the tolerance range of the target peak brightness (NO in F111), determining (F112) a bright area of the image, and if no bright area does exist (NO in F114), increasing (F119) an intensity of the illuminator;
- if the peak brightness is not within the tolerance range of the target peak brightness (NO in F111), determining (F112) a bright area of the image, and if at least one bright area does exist (YES in F114), determining (F115) an average brightness of the bright areas and if the average brightness of the bright areas is greater than a bright area average brightness threshold (YES in F116), decrasing (F118) illuminators intensity;
- if the peak brightness is not within the tolerance range of the target peak brightness (NO in F111), determining (F112) a bright area of the image, and if at least one bright are does exist (YES in F114) and the average brightness of the bright areas is equal to or less than the bright area average brightness threshold (NO in F116), keeping (F117) illuminators intensity.

2. The method of claim 1, further comprising:
prior to determining (F114) whether a bright area exists, determininig (F113) if a size of the bright area is equal to or greater than a bright area size threshold,
- if the bright area size is less than the bright area size threshold value (NO in F113), increasing (F119) illuminators intensity;
- if the bright area size is equal to or greater than a bright area size threshold (YES in F113), determining (F114) whether a bright area exists.

3. The method of claim 1 or 2, further comprising:
prior to determining (F112) a bright area of the image, determining (F110) a mode brigthness of the image.

4. The method of any one of claims 1 to 3, further comprising:
determining statistics inside an image procssing unit (F121),
determining whether a peak brightness at non linear space of the image is within a tolerance range at different processing stages (F122), and
determining whether to keep, increase or reduce the processing on the bright target (F123).

5. The method of claim 4, wherein the different image processing stages include a non linear tone mapping process calculation.

6. The method of claim 5, wherein the determing of statistics inside the image processing unit includes a histogram calculation and a cumulative histogram calculation, where the peak brightness at non linear space of the image is determined.

7. The method of any one of claims 1 to 6, wherein
the step of determining the peak brightness further comprises setting the peak brightness to be the average of the brightest pixels of any size, preferably 0.5-2%, 2-5% or 5-10%, of the total area of the image.

8. The method of any one of claims 1 to 7, wherein
the determining (F102) the peak brightness further comprises calculating the cumulative relative frequency of a calculated brightness histogram, and
the peak brightness corresponds to the brightness of the image of 90-99.8 %, preferably 90-95 % or 95-99.8 %, of a cumulative relative frequency.

9. The method of any one of claims 1 to 8, wherein the tolerance range of the target peak brightness is between 3-20 %, preferably 3-8 %, 5-15 % or 15-20 %.

10. The method of any one of claims 1 to 9, wherein
the peak brightness corresponds to a predertermined percentage, prerferably 98 %, of a cumulative frequency,
the cumulative frequency is determined by a cumulative histogram based on a brightness histogram of the image,
the bins of the brightness histogram match a number of ranges of the brightness of the image, preferably 1/2-1/3 of the number of ranges of the signal intensity of the image, or 1/3-1/10 of the number of ranges.

11. A monitoring device comprising a camera, an illuminator and means adapted to execute the steps of the method of any one of the claims 1 to 10.

12. The monitoring device according to claim 11, further comprising an image processing unit.

13. A computer program comprising instructions to cause the monitoring device according to claim 11 or 12 to execute the steps of the method of any one of the claims 1 to 10.

14. A computer-readable storage medium having stored thereon the computer program of claim 13.
